**Europäisches Patentamt**

**European Patent Office**

**Office européen des brevets**

(11) Numéro de publication : **0 555 112 A1**

(12) # DEMANDE DE BREVET EUROPEEN

(21) Numéro de dépôt : **93400125.6**

(22) Date de dépôt : **19.01.93**

(51) Int. Cl.⁵ : **B60K 17/24**

(30) Priorité : **07.02.92 FR 9201416**

(43) Date de publication de la demande :
**11.08.93 Bulletin 93/32**

(84) Etats contractants désignés :
**DE ES GB IT**

(71) Demandeur : **GLAENZER SPICER**
**10 Rue J.P. Timbaud**
**F-78301 Poissy (FR)**

(72) Inventeur : **Orain, Michel**
**10, rue des Cotes de Vannes**
**F-78700 Conflans-Sainte-Honorine (FR)**

(74) Mandataire : **Kohn, Philippe et al**
**c/o CABINET LAVOIX 2, place d'Estienne**
**d'Orves**
**F-75441 Paris Cédex 09 (FR)**

(54) **Dispositif de transmission articulé avec coupure de vibrations, et applications s'y rapportant.**

(57)    Le dispositif de transmission entre une sortie (12) d'un moteur (1) et une fusée de roue (15) comprend trois joints articulés (11, 13, 14) et un palier intermédiaire (16).

Le palier intermédiaire (16) est solidaire du moteur (1). Il est situé entre le joint (14) le plus proche de la roue et le joint intermédiaire (13). Il est porté par une cloche (18) qui contient le lubrifiant pour les deux joints les plus proches du moteur. Ce lubrifiant peut être le même que celui du moteur (1) ou de la boîte de vitesses ou du différentiel. Les distances mutuelles des trois joints et du palier déterminées pour couper la transmission des vibrations du moteur (1) vers la suspension (3, 4, 17) et le châssis (6, 8) du véhicule.

Utilisation pour améliorer le confort et supprimer les soufflets d'étanchéité en sortie de moteur.

FIG.1

EP 0 555 112 A1

La présente invention concerne un dispositif de transmission articulé capable de transmettre de la puissance de façon homocinétique entre deux sous-ensembles tels qu'un groupe moto-propulseur et une roue de véhicule, ou un groupe moto-propulseur et un différentiel de véhicule.

De tels dispositifs sont utilisés en particulier dans des véhicules à traction avant pour transmettre la puissance du moteur aux roues motrices. Ils sont constitués en général d'un arbre sous forme d'une barre ou d'un tube comportant à chaque extrémité un joint de transmission articulé. Or, les moteurs à explosion modernes atteignent un rapport puissance/masse élevé et présentent des régimes de vibrations difficilement réductibles. Pour assurer le confort des passagers, le moteur est suspendu à la structure du véhicule par des supports amortisseurs très souples afin que les vibrations qu'il engendre ne soient pas propagées dans l'ensemble du véhicule. Dans ces conditions, la seule liaison solide pouvant transmettre ces vibrations du moteur à la structure du véhicule, est l'arbre de transmission. Cet arbre de transmission peut être considéré comme une poutre rigide et pesante appuyée à ses deux extrémités par ses deux joints articulés homocinétiques, d'une part sur le groupe moteur générateur de vibrations, d'autre part sur le moyeu et le pivot de roue reliés eux-mêmes à la structure du véhicule par les bras de suspension. On peut considérer qu'au moins deux phénomènes vibratoires et sonores peuvent prendre naissance : les éléments de la caisse du véhicule peuvent être mis en résonnance par les excitations du moteur transmises par l'arbre de transmission au pivot de roue ; et il peut y avoir résonance de l'arbre lui-même en flexion lorsque les fréquences des vibrations du moteur sont en accord avec sa fréquence propre, amplifiant l'énergie des oscillations transmises à la caisse.

Certains joints homocinétiques connus, tels que les joints à tripodes, procurent en toute circonstance un très libre coulissement qui évite la transmission des composantes axiales des vibrations. Par contre, les composantes radiales de ces vibrations, dirigées perpendiculairement à l'axe de l'arbre menant ou de sortie du groupe moto-propulseur, ne sont pas filtrées.

Pour empêcher l'arbre de résonner et la transmission des vibrations du moteur vers l'habitacle, plusieurs palliatifs ont déjà été proposés.

Par exemple on a essayé d'étouffer les résonances au moyen de batteurs accordés sur les fréquences les plus gênantes et constitués par des anneaux massifs suspendus élastiquement sur les arbres à l'emplacement du ventre des ondes de flexion. Cependant, de tels batteurs sont encombrants et coûteux, ils créent souvent d'autres résonances, perdent leur efficacité en vieillissant et ne font en fin de compte que déplacer le problème sans procurer d'amélioration très sensible.

Les brevets FR-A-2 416 811 et FR-A-2 424 143 définissent un dispositif, qui, lorsqu'il est inclus dans l'arbre de transmission, coupe totalement la propagation vers la structure d'un véhicule des vibrations radiales en provenance du groupe moto-propulseur et améliore donc considérablement le confort.

Or, ce dispositif introduit un point d'articulation supplémentaire de l'arbre de transmission entre le groupe moteur et la roue et nécessite ipso-facto l'adjonction d'un palier intermédiaire pour soutenir l'arbre au voisinage de cette articulation supplémentaire.

Les distances entre les points d'articulation doivent répondre à une caractéristique précise fonction des masses et inerties des deux tronçons de la transmission selon les brevets cités.

Cependant, les différentes versions du dispositif présentent notamment l'inconvénient pratique de nécessiter l'installation d'un palier intermédiaire obligatoirement fixé à la structure du véhicule, alors que comparativement, les arbres conventionnels ne sont reliés qu'au groupe moto-propulseur et à la roue motrice.

Autre inconvénient, l'arbre de transmission situé près du groupe moto-propulseur est relativement très court, de sorte que l'angle de brisure des deux joints reliés par cet arbre peut atteindre des valeurs importantes.

En effet, au ralenti le moteur est animé d'oscillations et vibrations de grande amplitude sur une suspension généralement à basse fréquence propre, donc très souple. De plus, les tolérances d'assemblage du groupe moteur sur la structure s'additionnent à celles de l'installation du palier intermédiaire. Entrent également en ligne de compte l'affaissement des supports élastiques du moteur et l'effet de réaction des moments complémentaires générés par les joints et s'exerçant sur les supports élastiques du groupe et du palier intermédiaire.

Toutes ces raisons font que l'angle de travail des joints de l'arbre de transmission adjacent au groupe moto-propulseur est relativement important. Il en résulte donc que seuls les joints à mécanismes homocinétiques peuvent être utilisés.

Or, comme ces joints ne sont pas exempts de frottements, principalement sous couple, et que l'amplitude de ces frottements est approximativement proportionnelle à leur angle de travail, il apparait que la fonction de coupure dynamique, qui serait parfaite sans ces frottements, est compromise.

Un part de l'énergie dynamique des vibrations du groupe est donc transmise par ces frottements à travers les joints homocinétiques vers le support intermédiaire et vers la roue et sa suspension fixée à la structure.

On pallie cet inconvénient en installant le palier intermédiaire sur un support à grande souplesse radiale. Cependant cet artifice conduit encore à un accroissement de l'angle de travail des joints par suite de la flexion du support sous l'effet des moments complémentaires engendrés par les joints.

2

En résumé, le dispositif réalisable pratiquement selon les brevets cités nécessite la mise en place d'un palier intermédiaire souple fixé à la structure entre le moteur et la roue ; palier qui constitue une complication non négligeable et conduit immanquablement à une installation dans laquelle les frottements compromettent la coupure dynamique totale attendue du dispositif.

La présente invention a pour but de réaliser un dispositif de transmission destiné à être intercalé entre deux sous-ensembles et qui soit capable de réaliser une transmission homocinétique entre eux sans transmettre les composantes radiales des vibrations de l'un des sous-ensembles tout en éliminant au moins pour une part significative les inconvénients énoncés à propos de l'état de la technique.

Suivant l'invention, le dispositif de transmission articulé pour la transmission de puissance entre un premier et un deuxième sous-ensemble, le premier sous-ensemble étant susceptible de vibrations, le dispositif de transmission comprenant un premier arbre de transmission relié au premier sous-ensemble par un premier joint de transmission et un deuxième arbre de transmission relié au deuxième sous-ensemble par un deuxième joint de transmission, les deux arbres de transmission étant reliés l'un à l'autre par un joint de transmission intermédiaire, l'un des deux arbres de transmission étant supporté par un palier intermédiaire , est caractérisé en ce que le palier intermédiaire est porté par un support destiné à être relié de manière sensiblement rigide au premier sous-ensemble, et soutient le deuxième arbre de transmission de manière articulée relativement au premier sous-ensemble.

L'invention vise également une application du dispositif à une transmission latérale d'un véhicule automobile, dans laquelle le premier sous-ensemble est un groupe moto-propulseur et le deuxième sous-ensemble est une roue motrice.

L'invention vise encore une application du dispositif à une transmission longitudinale d'un véhicule automobile, dans laquelle le premier sous-ensemble est un groupe moto-propulseur et le deuxième sous-ensemble est un différentiel.

Ce dispositif permet d'éviter l'installation d'un palier intermédiaire souple sur la structure du véhicule ce qui permet l'utilisation soit de joints homocinétiques présentant un frottement négligeable sous petite angularité, tels que les joints à tripode équipés d'aiguilles, soit d'accouplements élastiques à base d'éléments flexibles en métal ou en élastomère, soit des joints de cardans et bipodes qui sont admissibles compte tenu de la faible angularité de travail demandée.

Ce dispositif constitue donc une coupure de vibrations radiales proche de la perfection.

D'autres particularités et avantages de l'invention ressortiront encore de la description ci-après, relative à des exemples non limitatifs.

Aux dessins annexés :
- la figure 1 est une vue de face, avec coupes partielles, d'un dispositif selon l'invention appliqué à la transmission latérale d'un véhicule automobile ;
- la figure 2 est une vue de dessus avec coupe partielle selon le plan II-II de la figure 1 ;
- la figure 3 est un schéma montrant l'allure du dispositif lorsque le groupe moto-propulseur s'incline autour de son centre de gravité ;
- la figure 4 est un schéma montrant l'allure du dispositif lorsque le groupe moto-propulseur se déplace parallèlement à lui-même ; et
- la figure 5 est une vue en élévation d'un dispositif selon l'invention appliqué à une transmission longitudinale de véhicule automobile.

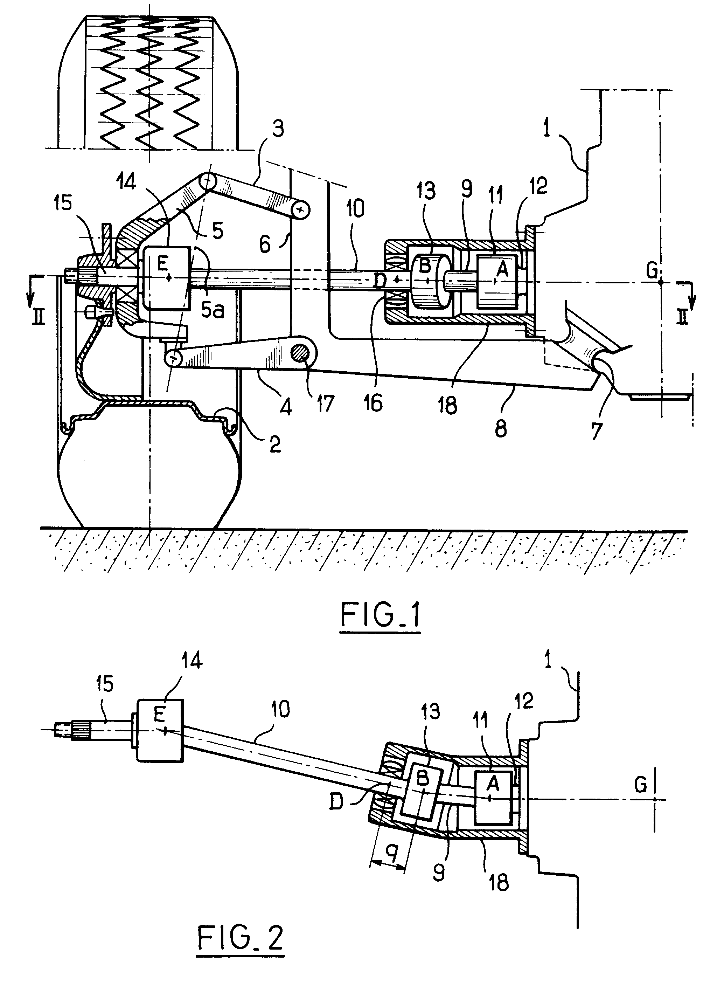

Les figures 1 et 2 représentent schématiquement l'installation du dispositif lorsqu'il est appliqué comme transmission latérale reliant un groupe moto-propulseur 1 à une roue motrice 2 qui peut être située à l'arrière ou à l'avant d'un véhicule, selon que le groupe moto-propulseur est lui-même installé à l'arrière ou à l'avant.

La roue est suspendue relativement à la structure par un système de biellettes 3 et 4 dont chacune est articulée au support de roue 5 et à un montant 6 de la structure 8 du véhicule. Si la roue 1 est directrice, le support de roue 5 pivote autour d'un axe de pivot 5a.

Le groupe moto-propulseur 1 est lui-même soutenu par des plots amortisseurs de suspension 7 montés sur des traverses 8 de la structure du véhicule. Une barre de torsion 17 en prise avec le bras 4 et la structure 8 soutient élastiquement le véhicule.

Le dispositif comprend deux arbres de transmission 9 et 10. Un premier 9 de ces arbres est relié par un premier joint de transmission 11 à l'arbre de sortie 12 du groupe moto-propulseur 1 et par un joint de transmission intermédiaire 13 au deuxième arbre 10. L'autre extrémité du deuxième arbre de transmission 10 est reliée à la fusée de roue 15 par un deuxième joint de transmission 14 ou "joint de roue". Un palier intermédiaire 16 soutient l'arbre 10 à proximité du centre d'articulation B du joint intermédiaire 13. Le palier intermédiaire 16 est du type oscillant, c'est-à-dire autorise, par rapport à un axe neutre, une certaine angularité de l'arbre 10. Le centre D du palier intermédiaire 16 est placé à une distance q du centre B du joint intermédiaire 13.

Le palier intermédiaire 16 est monté sur un support rigide fixé rigidement au groupe moto-propulseur 1.

EP 0 555 112 A1

Ce support peut prendre différentes formes depuis la console jusqu'au carter fermé 18 et selon les impératifs d'assemblage, d'encombrement, de protection, de coût, etc... tout en répondant aux conditions de la présente demande. Le carter 18 a dans l'exemple la forme d'une cloche enveloppant le premier joint 11, le joint intermédiaire 13 et le premier arbre 9, ainsi que la partie du second arbre 10 située entre le joint intermédiaire 13 et le palier intermédiaire 16. Le carter 18 peut être réalisé étanche vis à vis de l'extérieur. Le palier intermédiaire 16 peut constituer avantageusement la fermeture étanche de la prise de puissance du groupe moteur. Dans ce cas, l'intérieur du carter 18 communique avec l'intérieur du carter d'huile du groupe 1 ; les joints articulés 11 et 13 centrés en A et B bénéficient alors du lubrifiant du groupe moto-propulseur 1 et sont protégés à l'intérieur du carter 18 (figure 1). Cette disposition dispense des soufflets élastiques conventionnels.

Les vibrations radiales du palier intermédiaire 16 résultent d'une part des vibrations de translation du groupe moto-propulseur et d'autre part des oscillations de ce groupe moto-propulseur autour de son centre de gravité G, oscillations résultant principalement de l'irrégularité du couple propre au moteur à explosions.

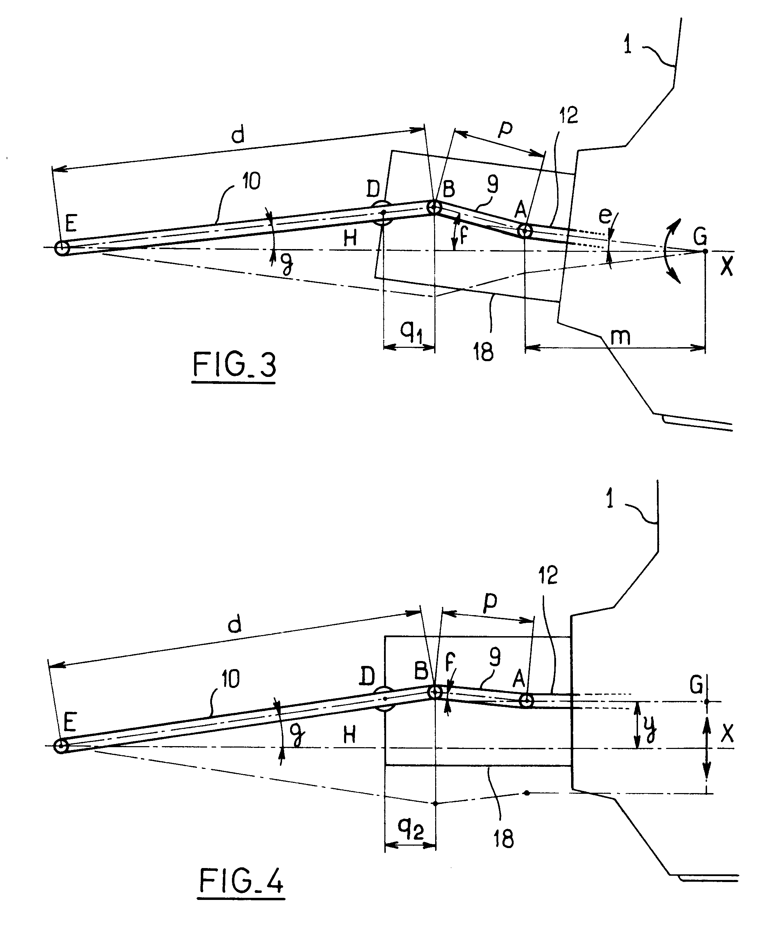

La figure 3 représente schématiquement la configuration du dispositif à l'instant où l'oscillation du groupe moteur atteint une amplitude e autour d'un axe perpendiculaire à la figure 3 passant par le centre de gravité G.

L'arbre de transmission 9 articulé en A, centre du premier joint, et en B, centre du joint intermédiaire, présente une longueur p (distance entre les centres A et B) et une masse Q dont le centre de gravité est situé approximativement à mi-longueur. Son inertie relative à l'axe perpendiculaire à la figure et passant par son centre de gravité est J.

De même le tronçon (10) articulé en B et E, centre du deuxième joint 14, présente une longueur d (distance entre les centres B et E), une masse M et, autour de son axe perpendiculaire à la figure et passant par son centre de gravité, une inertie I.

Le centre D du palier intermédiaire 16 est placé à une distance q du centre B du joint intermédiaire 13.

Sous l'effet des oscillations du groupe moto-propulseur, ce palier se déplace cycliquement. A une inclinaison e du groupe moto-propulseur correspondent un angle f du premier arbre 9 et un angle g du deuxième arbre 10 relativement à l'axe de référence fixe EX passant par le centre E du deuxième joint 14 et par le centre de gravité G du groupe moto-propulseur 1.

On appelle K le rapport des masses Q/M, et : kd et jp les rayons d'inertie des arbres 10 et 9, tels que :

$$I = M \left(\frac{kd}{2}\right)^2 \ \text{et} \ J = Q \left(\frac{jp}{2}\right)^2$$

La force à exercer en E pour maintenir immobile l'extrémité de l'arbre 10 adjacente au deuxième joint 14 est annulée selon l'invention pour une certaine valeur $q_1$ de la distance q entre les centres D du palier intermédiaire 16 et B du joint intermédiaire 13. Cette valeur est donnée par :

$$q_1 = d \left( \frac{-b + \sqrt{b^2 - 4ac}}{2a} \right)$$

avec :

$$a = K \left[ 1 - j^2 - \frac{m}{d} (1 + j^2) \right] + 2$$

$$b = K \left[ \frac{2m}{d} + \frac{p}{d} (1 - j^2) \right] + k^2 - 1 + 2 \left(\frac{m}{d} + \frac{p}{d}\right)$$

$$c = \left(\frac{m}{d} + \frac{p}{d}\right) (k^2 - 1)$$

Pour la clarté de l'exposé, l'axe d'oscillation qui contient le centre de gravité G est supposé perpendiculaire au plan de la Figure 3.

Mais la neutralité des réactions à l'extrémité E de l'arbre 10 serait également conservée si l'axe d'oscillation présentait une orientation quelconque et si plusieurs régimes d'oscillations ayant des fréquences, amplitudes et phases différentes étaient superposés, étant entendu que les composantes axiales des vibrations sont neutralisées par le ou les joints à très libre coulissement placés en A et/ou en B.

La figure 4 représente schématiquement la configuration du dispositif à l'instant où le déplacement du centre de gravité G du groupe moto-propulseur 1 atteint l'amplitude "y" relativement à l'axe de référence EX.

Pour ce type de vibration on constate que la force à exercer en E pour maintenir immobile l'extrémité du tronçon 10 adjacente au joint 14 est annulée selon l'invention, pour une certaine valeur $q_2$ de la distance q entre le centre D du palier intermédiaire 16 et le centre B du joint intermédiaire 13.

$$q_2 = d \left[ \frac{1 + K - \sqrt{(1+K)^2 - K(1+j^2)(1-k^2)}}{K(1+j^2)} \right]$$

Pour la clarté de l'exposé à la figure 4, la direction de la flèche "y" est représentée perpendiculaire à l'axe de référence EX. Mais la neutralité des réactions à l'extrémité E de l'arbre 10 serait conservée si la direction de la flèche était quelconque, de même que si plusieurs régimes de vibration ayant des fréquences, amplitudes et phases différentes étaient superposés, étant entendu que les composantes axiales, dirigées selon l'axe EX, de ces vibrations sont absorbées par le ou les joints à très libre coulissement disposés en A ou en B, ou en A et en B.

Enfin, la même neutralité de l'extrémité E de l'arbre 10 est réalisée pour les vibrations combinées en oscillation (e) et en translation (y) du groupe moto-propulseur, ce qui est le cas général des véhicules automobiles.

On constate que pratiquement les valeurs $q_1$ et $q_2$ de la distance q sont très voisines de sorte qu'il est possible de faire en sorte que la distance q soit sensiblement égale à l'une et à l'autre de ces valeurs. Celles-ci, bien que relativement faibles, laissent un espace convenable pour l'installation du palier oscillant 16 en D, près du joint intermédiaire 13 centré en B.

Par exemple pour une installation présentant les caractéristiques suivantes :

| | | |
|---|---|---|
| d = 350 mm, | p = 150 mm, | m = 200 mm |
| k = 0,75, | j = 0,75, | K = Q/M = 0,2 |

on obtient les deux valeurs optimales de q soit :

$q_1$ = 65,4 mm pour les oscillations du groupe autour du centre de gravité G (figure 3)

et $q_2$ = 69,4 mm pour les vibrations rectilignes du centre de gravité G (figure 4).

La distance q adoptée pratiquement sera choisie avantageusement entre ces deux valeurs $q_1$ et $q_2$ en se rapprochant de la valeur correspondant au type de vibrations le plus gênant dans le cas considéré.

La prédominance de l'un ou l'autre type dépend notamment de l'orientation du moteur (transversale ou longitudinale) de ses moments d'inerties, de l'implantation et des caractéristiques de ses supports de suspension, etc...

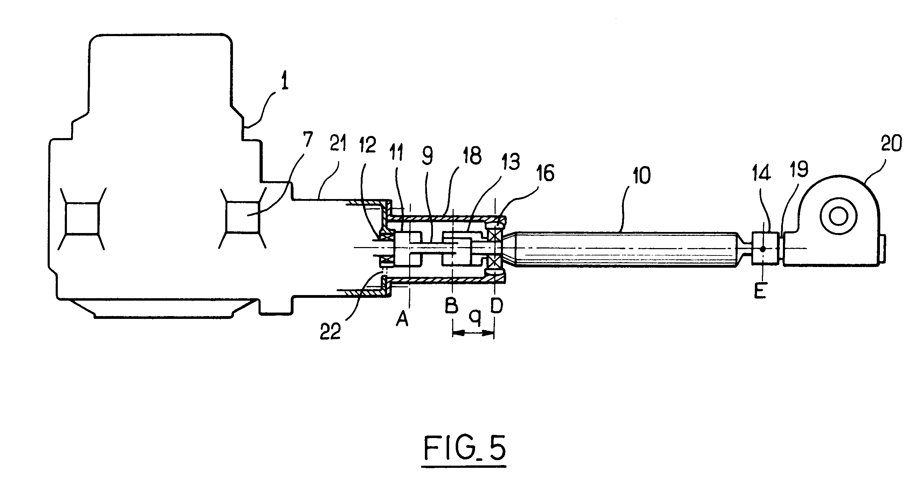

La figure 5 représente une application de l'invention à une ligne de transmission longitudinale de véhicule à propulsion par les roues arrière. L'arbre 10 est relié par le deuxième joint articulé 14 centré en E, de préférence à très libre coulissement et homocinétique, à l'arbre 19 du pignon d'attaque du différentiel 20.

On retrouve le palier intermédiaire 16 articulé en D sur un cartier 18 solidaire du groupe moto-propulseur 1, 21 ainsi que le joint intermédiaire 13 centré en B à l'extrémité de l'arbre 10. L'arbre 9 très court relie ce joint intermédiaire 13 au premier joint 11 centré en A sur l'arbre de sortie 12 de la boîte de vitesses 21 du groupe moto-propulseur 1.

Lorsque le moteur vibre et oscille sur sa suspension élastique constituée par les plots 7, les réactions radiales en E sont nulles lorsque la distance q entre les centres B et D est réglée à une certaine valeur voisine des valeurs $q_1$ et $q_2$ définies plus haut.

De même que pour la transmission latérale (figure 1), le lubrifiant de la boîte de vitesses 21 peut être utilisé avantageusement pour la lubrification des joints articulés 11 et 13 situés dans le carter 18 grâce à un orifice d'intercommunication 22 entre l'intérieur de la boîte de vitesses 21 et l'intérieur du carter 18.

## Revendications

1. Dispositif de transmission articulé pour la transmission de puissance entre un premier et un deuxième sous-ensemble (1, 2), le premier sous-ensemble (1) étant susceptible de vibrations, le dispositif de transmission comprenant un premier arbre de transmission (9) relié au premier sous-ensemble (1) par un premier joint de transmission (9) et un deuxième arbre de transmission (10) relié au deuxième sous-ensemble (2) par un deuxième joint de transmission (14), les deux arbres de transmission étant reliés l'un à l'autre par un joint de transmission intermédiaire (13), l'un des deux arbres de transmission (9, 10) étant supporté par un palier intermédiaire (16), caractérisé en ce que le palier intermédiaire (16) est porté par un support (18) destiné à être relié de manière sensiblement rigide au premier sous-ensemble (1), et soutient le deuxième arbre de transmission (10) de manière articulée relativement au premier sous-ensemble (1).

2. Dispositif selon la revendication 1, caractérisé en ce que le palier intermédiaire (16) est d'un type capable d'accomoder, par rapport à un axe neutre, une certaine angularité du second arbre de transmission (10), qui traverse le palier intermédiaire (16).

3. Dispositif de transmission selon l'une des revendications 1 ou 2, caractérisé en ce qu'il obéit sensiblement à la relation

$$q = d \left( \frac{-b + \sqrt{b^2 - 4ac}}{2a} \right)$$

dans laquelle

q = distance entre le centre (B) du joint de transmission intermédiaire (13) et le centre d'oscillation (D) du deuxième arbre de transmission (10) dans le palier intermédiaire (16) ;

d = distance entre le centre d'oscillation (D) et le centre (E) du second joint de transmission (14)

$$a = K \left[ 1 - j^2 - \frac{m}{d}(1 + j^2) \right] + 2$$

$$b = K \left[ \frac{2m}{d} + \frac{p}{d}(1 - j^2) \right] + k^2 - 1 + 2\left( \frac{m}{d} + \frac{p}{d} \right)$$

$$c = \left( \frac{m}{d} + \frac{p}{d} \right)(k^2 - 1)$$

avec K = (masse Q du premier arbre de transmission) / (masse M du deuxième arbre de transmission) ;

p = distance entre le centre d'oscillation (D) et le centre (A) du premier joint de transmission (11) ;

j = facteur par lequel il faut multiplier la distance p pour obtenir le rayon d'inertie du premier arbre de transmission (9) ;

k = facteur par lequel il faut multiplier la distance d pour obtenir le rayon d'inertie du deuxième arbre de transmission (10) ;

m = distance entre le centre de gravité (G) du premier sous-ensemble (1) et le centre (A) du premier joint de transmission (11).

4. Dispositif de transmission selon l'une des revendications 1 à 3, caractérisé en ce qu'il obéit sensiblement à la relation

$$q = d \left[ \frac{1 + K - \sqrt{(1 + K)^2 - K(1 + j^2)(1 - k^2)}}{K(1 + j^2)} \right]$$

relation dans laquelle

q = distance entre le centre (B) du joint de transmission intermédiaire (13) et le centre d'oscillation (D) du deuxième arbre de transmission (10) dans le palier intermédiaire (16) ;

d = distance entre le centre d'oscillation (D) et le centre (E) du second joint de transmission (14) ;

K = (masse Q du premier arbre de transmission) / (masse M du deuxième arbre de transmission) ;

p = distance entre le centre d'oscillation (D) et le centre (A) du premier joint de transmission (11) ;

j = facteur par lequel il faut multiplier la distance p pour obtenir le rayon d'inertie du premier arbre de transmission (9) ;

k = facteur par lequel il faut multiplier la distance d pour obtenir le rayon d'inertie du deuxième arbre de transmission (10) ;

5. Dispositif selon l'une des revendications 1 à 4, caractérisé en ce que le support (18) est en forme de cloche enveloppant le premier joint de transmission (11), le joint de transmission intermédiaire (13), et le premier arbre de transmission (9), ainsi que le deuxième arbre de transmission (10) depuis le joint de transmission intermédiaire (13) jusqu'au palier intermédiaire (16).

6. Dispositif selon la revendication 5, caractérisé en ce que le palier intermédiaire (16) est étanche et la cloche (18) contient de l'huile.

7. Application du dispositif selon l'une des revendications 1 à 4 à une transmission latérale d'un véhicule automobile, dans laquelle le premier sous-ensemble est un groupe moto-propulseur (1) et le deuxième sous-ensemble est une roue motrice (1).

8. Application du dispositif selon l'une des revendications 1 à 4 à une transmission longitudinale d'un véhicule automobile, dans laquelle le premier sous-ensemble (1, 21) est un groupe moto-propulseur et le deuxième sous-ensemble est un différentiel (20).

9. Application selon l'une des revendications 8 ou 9, caractérisée en ce que le support (18) est en forme de cloche enveloppant le premier joint de transmission (11), le joint de transmission intermédiaire (13) et le premier arbre de transmission (9) ainsi que le deuxième arbre de transmission (10) depuis le joint de transmission intermédiaire (13) jusqu'au palier intermédiaire (16), et en ce qu'il est prévu une communication (22) entre la cloche (18) et une réserve d'huile du groupe moto-propulseur (1, 21) de manière que le premier joint de transmission (11) et le joint de transmission intermédiaire (13) soient lubrifiés par la réserve d'huile du groupe moto-propulseur.

FIG. 1

FIG. 2

FIG.3

FIG.4

FIG.5

Office européen
des brevets

**RAPPORT DE RECHERCHE EUROPEENNE**

Numero de la demande

EP    93 40 0125

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 416 811 (GLAENZER SPICER)<br>* revendication 1; figure 1 *<br>--- | 1,3,4,7 | B60K17/24 |
| A | FR-A-2 429 687 (GLAENZER SPICER)<br>* revendication 1; figure *<br>--- | 1,3,4,8 | |
| A | GB-A-2 181 516 (ZAHNRADFABRIK FRIEDRICHSHAFEN AG)<br>* page 2, ligne 17 - ligne 31;<br>revendication 1; figures 1,2 *<br>--- | 1 | |
| A | US-A-4 413 701 (KUMAGAI)<br>* revendication 1; figure 1 *<br>----- | 1 | |
| | | | **DOMAINES TECHNIQUES RECHERCHES (Int. Cl.5)**<br><br>B60K |

Le présent rapport a été établi pour toutes les revendications

| Lieu de la recherche | Date d'achèvement de la recherche | Examinateur |
|---|---|---|
| LA HAYE | 17 MAI 1993 | BUFACCHI B.A.M. |